# EUROPÄISCHE PATENTSCHRIFT

(11) **EP 2 225 791 B1**
(45) Veröffentlichungstag und Bekanntmachung des Hinweises auf die Patenterteilung: **08.01.2014**
(21) Anmeldenummer: 08855693.1
(22) Anmeldetag: 19.11.2008
(51) Int. Cl.: H01M 10/44, H02J 7/00, B60L 11/18

(54) **AKKUMULATORBLOCK MIT COMPUTER BZW. ELEKTRONISCHEM SPEICHER SOWIE VERFAHREN ZUM BETREIBEN EINES ÜBERÖRTLICHEN SYSTEMS ZUM AUFLADEN VON AKKUMULATORBLÖCKEN**
BATTERY BLOCK HAVING A COMPUTER OR ELECTRONIC MEMORY AND METHOD FOR OPERATING A SUPRALOCAL SYSTEM FOR CHARGING BATTERY BLOCKS
BLOC D'ACCUMULATEURS COMPORTANT UN ORDINATEUR OU UNE MÉMOIRE ÉLECTRONIQUE ET PROCÉDÉ D'UTILISATION D'UN SYSTÈME SUPRALOCAL POUR LE CHARGEMENT DE BLOCS D'ACCUMULATEURS

(30) Priorität: 27.11.2007 DE 102007057353
(43) Veröffentlichungstag der Anmeldung: 08.09.2010
(73) Patentinhaber: BEG GmbH, 49832 Thuine (DE)
(72) Erfinder: BRÜNDERMANN, Georg, 49832 Thuine (DE)
(74) Vertreter: Lippert, Hans-Joachim
(86) Internationale Anmeldenummer: PCT/EP2008/065839
(87) Internationale Veröffentlichungsnummer: WO 2009/068464

(56) Entgegenhaltungen:
- EP-A- 0 233 638
- EP-A- 1 667 306
- FR-A- 2 763 028
- GB-A- 2 353 151
- US-A1- 2002 132 144
- US-A1- 2003 209 375
- US-A1- 2005 017 679

## Beschreibung

Die Erfindung betrifft einen Akkumulatorblock mit einem integrierten Computer bzw. elektronischen Speicher, insbesondere zum Speisen von Elektromotoren, die zum Antrieb von Land-, Wasser- und/oder Luftfahrzeugen vorgesehen sind, sowie ein Verfahren zum Betreiben eines überregionalen Systems zum Aufladen von Akkumulatorblöcken.

Ein bekanntes Antriebssystem für Fahrzeuge besteht aus mindestens einem Elektromotor für jedes Fahrzeug, einer Kraftübertragung von dem Elektromotor auf mindestens eines der Laufräder des Fahrzeugs sowie einem aufladbaren Akkumulatorblock zur Versorgung des Elektromotors mit elektrischer Energie. Die entladenen bzw. teilweise entladenen Akkumulatorblöcke können dabei in flächendeckend angeordneten Wechselstationen, in denen die Akkumulatorblöcke wieder aufgeladen werden, ausgetauscht werden. Alternativ besteht auch die Möglichkeit, die Akkumulatorblöcke an Orten, an denen Stromanschlüsse zur Verfügung stehen, ohne einen vorhergehenden Ausbau aufzuladen.

Der Erfindung liegt die Aufgabe zugrunde, die Akkumulatorblöcke so zu gestalten, dass die Erfassung und Abrechnung der zum Aufladen der Akkumulatorblöcke benötigten Strommengen erleichtert und vereinfacht wird.

Zu diesem Zweck werden Akkumulatorblöcke zur Verfügung gestellt, insbesondere zum Speisen von Elektromotoren, die zum Antrieb von Land-, Wasser- und/oder Luftfahrzeugen vorgesehen sind, die mit einem integrierten Computer bzw. einem elektronischen Speicher versehen sind.

Mittels eines solchen Akkumulatorblocks wird die der Erfindung zugrundeliegende Aufgabe gemäß den in Anspruch 1 enthaltenen Merkmalen gelöst.

Während die Daten zur Identifizierung des Akkumulatorblocks herstellerseitig oder durch nachträgliche Programmierung eingegeben werden können, können die Daten des jeweiligen Benutzers und seines Fahrzeugs beispielsweise durch Verwendung einer Chipkarte oder über anderweitige Zugangscodes durch den Benutzer selbst eingegeben werden.

Um das System störungsfrei funktionsfähig zu machen, kann in dem integrierten Computer bzw. elektronischen Speicher zumindest die Identifikationsnummer des Akkumulatorblocks , die Identifikationsnummer der angezapften Ladestationen, die Identifikationsnummer des jeweiligen Benutzers und dessen Vorgänger sowie des Fahrzeugs, der aktuelle Ladezustand des Akkumulatorblocks sowie der zeitliche und mengenmäßige Verlauf der Aufladungen und Entladungen eingespeichert und durch den Zentralcomputer abgleichbar und registrierbar sein.

Ein solcher Akkumulatorblock lässt sich sowohl in den flächendeckend vorgesehenen Wechselstationen bequem aufladen und handhaben als auch an anderen Orten, an denen spezielle Stromversorgungseinrichtungen zur Verfügung stehen, einsetzen.

Vorzugsweise ist der integrierte Computer bzw. elektronische Speicher, beispielsweise ein Halbleiter-Speicherchip, während des Aufladevorgangs über das Internet oder ein Telefonnetz mit dem Zentralcomputer verbindbar. Dies kann beispielsweise dadurch erfolgen, dass in den speziellen Stromanschlusssteckern entsprechende Verbindungen vorgesehen sind, sodass die Verbindung zu dem Zentralcomputer beim Einsetzen der Anschlussstecker automatisch erfolgt.

Der integrierte Computer bzw. elektronische Speicher ist derart ausgelegt, dass die Verbindung zum Zentralcomputer je nach örtlichen Gegebenheiten über ein Festnetz oder über Funk erfolgen kann.

Die Steckeranschlüsse des Akkumulatorblocks sind zweckmäßigerweise so ausgelegt, dass der Ladevorgang derart erfolgt, dass er von einem Informationssystem des integrierten Computers bzw. elektronischen Speichers kontrolliert bzw. protokolliert werden kann.

Ferner kann in dem Akkumulatorblock ein integrierter Sicherungsschalter vorgesehen sein, der nur bei Erkennen der Zugangsberechtigung zu der jeweiligen Stromquelle aktivierbar ist.

Mit Hilfe des erfindungsgemäßen Akkumulatorblocks ist ein sehr vorteilhaftes Verfahren zum Betreiben eines überregionalen Systems zum Aufladen der Akkumulatorblöcke praktizierbar.

Dabei werden die Akkumulatorblöcke zweckmäßigerweise in speziell vorgesehenen Wechselstationen, in denen die Akkumulatorblöcke ausgetauscht werden, oder an beliebigen anderen Orten, an denen speziell eingerichtete Stromanschlüsse zur Verfügung stehen, aufgeladen, wobei mit Hilfe des in dem jeweiligen Akkumulatorblock vorgesehenen Computers bzw. elektronischen Speichers nach Abgleich der in dem Computer gespeicherten Daten eine Freischaltung zur Stromentnahme erfolgt.

Die aufgeladene Strommenge wird dann durch den Zentralcomputer registriert und individuell mit dem Benutzer oder der Wechselstation abgerechnet.

Mit Hilfe des erfindungsgemäßen Verfahrens ist es möglich, dass der jeweilige Stromlieferant entscheidet, wann und welcher Akkumulatorblock wie viel Strom zur Aufladung erhält. Dieses Verfahren ermöglicht eine überregionale Planung und Steuerung , die extrem wichtig ist, um die wechselnden Schwankungen im Angebot der elektrischen Energie direkt mit dem Aufladen einer großen Anzahl von Akkumulatorblöcken abzugleichen. Dabei wird man zweckmäßigerweise so vorgehen, dass die Akkumulatorblöcke bei ihrem Anschluss an die Stromquelle zunächst nur teilweise, beispielsweise zu 50%, aufgeladen werden, also eine bestimmte Mindestladung erhalten. In Abhängigkeit von der gerade zur Verfügung stehenden Strommenge im Verbundnetz erfolgt dann gegebenenfalls früher oder später eine weitere Aufladung der Akkumulatorblöcke bis zu 100%. Ein solches Verfahren ist insbesondere in den Wechselstationen, in denen die Akkumulatorblöcke unabhängig von den Fahrzeugen aufgeladen werden, zweckmäßig und gut praktizierbar. Wenn allerdings der Benutzer seinen Akkumulatorblock selbst und ohne auszubauen kurzfristig auf 100% aufladen will, so ist dies ebenfalls möglich, wobei die entsprechenden Daten über den Zentralcomputer gespeichert und die kurzfristig zuviel entnommene Strommenge zu erhöhten Kosten abgerechnet wird.

Die erfindungsgemäßen Akkumulatorblöcke sind beispielsweise so aufgebaut, dass der integrierte Computer bzw. elektronische Speicher in einem gemeinsamen Gehäuse mit dem jeweiligen Akkumulatorblock untergebracht ist. Alternativ besteht auch die Möglichkeit, den Computer bzw. elektronischen Speicher außen an dem Gehäuse zu befestigen und ihn unverlierbar mit diesem zu verbinden.

Die Steuerung der Stromzuführung zu dem Akkumulatorblock erfolgt nur über diesen integrierten Computer bzw. Speicher. In diesem Computer bzw. Speicher werden nach Anschluss an das Stromnetz mittels eines speziell dafür ausgelegten Anschlusssystems mit jeweils einer eigenen laufenden Identifikationsnummer die Daten des Akkumulatorblocks mittels eines Informationssystems an den Zentralcomputer übertragen, der beispielsweise von dem Stromlieferanten betrieben wird. Eine Stromzuführung erfolgt nur dann, wenn die Verbindung zwischen dem integrierten Computer bzw. Speicher und dem Zentralcomputer hergestellt ist und die Zugangsdaten abgeglichen sind. Ein solches System, das in jedes Fahrzeug einzubauen ist, dient als Sicherheit für die Kraftfahrzeugbenutzer und Stromlieferanten. Zwischen dem Anschluss und dem Akkumulatorblock kann beispielsweise ein Laderegler eingebaut werden, der entsprechend der vorgegebenen Daten des Zentralcomputers die Aufladung des Akkumulatorblocks bis zu einem bestimmten Grad bzw. einem bestimmten Prozentsatz festlegt.

Alternativ kann auch ein zusätzlicher interner Sicherungsschalter in dem jeweiligen Akkumulatorblock vorgesehen sein, der eine nicht zugelassene Stromentnahme Dritter aus dem jeweiligen Stromanschluss verhindert. In dem Zentralcomputer des Stromlieferanten werden laufend die Daten der verbundenen Akkumulatorblöcke empfangen. Nach einer erfolgreichen Verbindung mit einem Akkumulatorblock werden als erstes die empfangenen Daten mit den gespeicherten Daten verglichen und einer entsprechenden Prüfung unterzogen. Es wird damit verhindert, dass Kunden mit manipulierten Computern bzw. Speichern Strom beziehen können. Ist die Prüfung erfolgreich beendet und der angeschlossene Akkumulatorblock eindeutig einem Kunden zugeordnet worden, so wird die Stromlieferung durch den Zentralcomputer freigegeben.

Mit Hilfe des neuen Akkumulatorblocks sowie des neuen Verfahrens ist nicht nur eine Umstellung der gesamten Fahrzeugantriebe auf Elektromotoren und ein umweltschonender Betrieb möglich, sondern es lassen sich insbesondere alternative Stromquellen optimal einsetzen. Dazu ist es allerdings erforderlich, dass eine ausreichende Anzahl von Akkumulatorblöcken vorhanden ist und die Aufladung entsprechend der jeweiligen zur Verfügung stehenden Strommenge teilweise zeitversetzt erfolgen kann.

Da die Kunden bzw. ihre Fahrzeuge beim Austauschen bzw. Aufladen der Akkumulatorblöcke über den Zentralcomputer identifizierbar sind, können auch gestohlen gemeldete Fahrzeuge leicht identifiziert und aufgefunden werden.

## Patentansprüche

1. Akkumulatorblock, insbesondere zum Speisen von Elektromotoren, die zum Antrieb von Land-, Wasser- und/oder Luftfahrzeugen vorgesehen sind, mit einem integrierten Computer bzw. elektronischen Speicher, in dem Daten zur Identifizierung des Akkumulatorblocks gespeichert sind, w ob e i in dem integrierten Computer bzw. elektronischen Speicher weiterhin Daten zur Identifizierung des jeweiligen Benutzers und Fahrzeugs gespeichert sind, der Computer bzw. elektronische Speicher unmittelbar vor und während des Aufladevorgangs des Akkumulatorblocks sowohl im eingebauten Zustand an jeder beliebigen Stromquelle als auch im ausgebauten Zustand in Wechselstationen über das Internet oder ein Telefonnetz mit einem Zentralcomputer eines überregionalen Systems verbindbar ist und der Zentralcomputer die gespeicherten Daten des Akkumulatorblocks abgleicht, die Zugangsberechtigung zur Stromquelle überprüft und die aufgeladene Strommenge diesen Daten zuordnet, wobei die aufgeladene Strommenge durch den Zentralcomputer registriert und individuell mit dem Benntzer oder der Wechselstation abgerechnet wird.

2. Akkumulatorblock nach Anspruch 1, **dadurch gekennzeichnet, dass** in dem integrierten Computer bzw. elektronischen Speicher zumindest seine Identifikationsnummer, die Identifikationsnummer der angezapften Ladestationen, die Identifikationsnummer des jeweiligen Benutzers und dessen Vorgänger, der aktuelle Ladezustand des Akkumulatorblocks sowie der zeitliche und mengenmäßige Verlauf der Aufladungen und Entladungen eingespeichert und durch den Zentralcomputer abgleichbar und registrierbar sind.

3. Akkumulatorblock nach Anspruch 2, **dadurch gekennzeichnet, dass** die Verbindung zum Zentralcomputer über ein Festnetz erfolgt.

4. Akkumulatorblock nach Anspruch 2, **dadurch gekennzeichnet, dass** die Verbindung zum Zentralcomputer über Funk erfolgt.

5. Akkumulatorblock nach einem der Ansprüche 1 bis 4, **dadurch gekennzeichnet, dass** der Ladevorgang über einen Steckeranschluss erfolgt und von einem Informationssystem des integrierten Computers bzw. elektronischen Speichers kontrollierbar ist.

6. Akkumulatorblock nach Anspruch 5, **dadurch gekennzeichnet, dass** ein interner Sicherungsschalter vorgesehen ist, der nur bei Erkennen der Zugangsberechtigung zu der jeweiligen Stromquelle aktivierbar ist.

7. Verfahren zum Betreiben eines überregionalen Systems zum Aufladen von Akkumulatorblöcken gemäß einem der Ansprüche 1 bis 6, **dadurch gekennzeichnet, dass** an beliebigen Orten, an denen speziell eingerichtete Stromanschlüsse zur Verfügung stehen und die Akkumulatorblöcke in dem Fahrzeug verbleiben können, oder in speziell vorgesehenen Wechselstationen für die Akkumulatorblöcke diese aufgeladen werden und dass mit Hilfe des in dem jeweiligen Akkumulatorblock vorgesehenen Computers bzw. elektronischen Speichers nach Abgleich der in dem Computer bzw. Speicher gespeicherten Daten eine Freischaltung zur Stromentnahme erfolgt.

8. Verfahren nach Anspruch 7, **dadurch gekennzeichnet, dass** der aufzuladende Akkumulatorblock über die Signale des Zentralcomputers zunächst nur eine bestimmte Mindestladung erhält und dass in Abhängigkeit von der gerade zur Verfügung stehenden Strommenge im Verbundnetz gegebenenfalls früher oder später eine weitere Aufladung erfolgt.

## Claims

1. Battery block, particularly for supplying electric motors provided for driving land crafts, watercrafts and/or aircrafts, comprising an integrated computer or electronic memory storing data for identifying the battery block, wherein in said integrated computer or electronic memory data for identifying the respective user or vehicle are stored in addition, wherein said computer or electronic memory can be connected to a central computer of a supra-regional system via the worldwide web or a telephone network directly before or during the charging process of the battery block both in its installed condition at an arbitrary power source and in the uninstalled condition at changing stations, and wherein said central computer compares the stored battery block data, verifies the authorization for access to the power source and assigns the charged amount of current to these data, wherein said charged amount of current is registered by the central computer and settled individually with the user or the changing station.

2. Battery block according to claim 1, **characterized in that** in said integrated computer or electronic memory at least a user's identification number, the identification number of the tapped charging station, the identification number of the respective user and his predecessor, the current charge condition of the battery block as well as the temporal and quantitative history of charging and discharging operations are stored and can be compared and registered by the central computer.

3. Battery block according to claim 2, **characterized in that** the connection to the central computer takes place via fixed network.

4. Battery block according to claim 2, **characterized in that** the connection to the central computer takes place via radio.

5. Battery block according to one of the claims 1 to 4, **characterized in that** charging takes place through a plug connection and can be checked by an information system of the integrated computer or electronic memory.

6. Battery block according to claim 5, **characterized in that** an internal safety switch is provided which can be activated only upon identification of the authorization for access to the respective power source.

7. Process for operating a supra-regional system for charging battery blocks according to one of the claims 1 to 6, **characterized in that** at arbitrary locations where specially installed electrical connections are available and where the battery blocks can stay in the vehicle, or at specially provided changing stations for the battery blocks at which said battery blocks are charged, a current drain is activated with the aid of the computer or electronic memory provided in the respective battery block after a comparison of the data stored in the computer or memory.

8. Process according to claim 7, **characterized in that** the battery block to be charged first receives only a defined minimum charge via signals of the central computer and that additional charging takes place sooner or later in dependence of the amount of current just available in the interconnected systems.

## Revendications

1. Bloc d'accumulateurs, notamment pour l'alimentation des moteurs électriques destinés à l'entraînement des véhicules terrestres, des bateaux et/ou des aéronefs, comprenant un ordinateur intégré ou une mémoire électronique dans laquelle sont mémorisées des données pour l'identification du bloc d'accumulateurs, et dans ledit ordinateur ou dans ladite mémoire sont mémorisées en outre des données pour l'identification de l'utilisateur et du véhicule respectifs, et dans lequel l'ordinateur ou la mémoire électronique peuvent êtres connectés avec un ordinateur central d'un système suprarégional via l'internet ou un réseau téléphonique directement avant et pendent le processus de chargement du bloc d'accumulateurs non seulement dans l'état installé sur une source de courant quelconque mais aussi dans l'état désinstallé aux stations de change, et dans lequel l'ordinateur central fait une comparaison des données mémorisées du bloc d'accumulateurs et vérifie l'autorisation d'accès à la source de courant et affecte la quantité chargée de courant auxdites données, ladite quantité chargée de courant étant enregistrée par l'ordinateur central et réglée individuellement avec l'utilisateur ou la station de change.

2. Bloc d'accumulateurs selon la revendication 1, **caractérisé en ce que** dans l'ordinateur intégré ou dans la mémoire électronique sont mémorisés et peuvent être recoupés et enregistrés au moins le numéro d'identification de l'utilisateur, le numéro d'identification de la station de charge gemmée, le numéro d'identification de l'utilisateur respectif et de son prédécesseur, l'état de charge actuel du bloc d'accumulateurs ainsi que l'historique temporel et quantitatif des chargements et déchargements.

3. Bloc d'accumulateurs selon la revendication 2, **caractérisé en ce que** la connexion avec l'ordinateur central se fait via une poste fixe.

4. Bloc d'accumulateurs selon la revendication 2, **caractérisé en ce que** la connexion avec l'ordinateur central se fait via le contact radio.

5. Bloc d'accumulateurs selon l'une des revendications 1 à 4, **caractérisé en ce que** le processus de chargement se fait via une connexion par fiches et peut être contrôlé d'un système d'information de l'ordinateur central ou d'une mémoire électronique.

6. Bloc d'accumulateurs selon la revendication 5, **caractérisé en ce qu'**il est prévu un disjoncteur interne qui peut être activé seulement en cas de l'identification de l'autorisation d'accès à la source de courant respective.

7. Procédé d'utilisation d'un système suprarégional pour le chargement de blocs d'accumulateurs selon les revendications 1 à 6, **caractérisé en ce que** les blocs d'accumulateurs sont chargés aux locaux quelconques où sont disponibles des dispositifs de raccordements électriques installés spécifiquement et où les blocs d'accumulateurs peuvent rester dans la véhicule, ou le blocs d'accumulateurs peuvent être chargés dans des stations de charge spéciales et que le prélèvement de courant va être déverrouillé à l'aide de l'ordinateur ou la mémoire électronique prévus dans le bloc d'accumulateurs après le recoupement des données mémorisées dans l'ordinateur ou dans la mémoire.

8. Procédé selon la revendication 7, **caractérisé en ce que** le bloc d'accumulateurs qui doit être chargé reçoit pour l'instant seulement une charge minimale spécifiée via les signaux de l'ordinateur central et qu'une chargement ultérieure se fait à terme en fonction de la quantité de courant disponible à l'instant dans les réseaux interconnectés.
